# EUROPÄISCHE PATENTSCHRIFT

(11) **EP 1 198 676 B1**
(45) Veröffentlichungstag und Bekanntmachung des Hinweises auf die Patenterteilung: **22.12.2004**
(21) Anmeldenummer: 01911690.4
(22) Anmeldetag: 23.02.2001
(51) Int. Cl.: F16B 13/12, F16B 23/00

(54) **ANORDNUNG UND VERFAHREN ZUM BEFESTIGEN VON GEGENSTÄNDEN**
ARRANGEMENT AND METHOD FOR FIXING OBJECTS
DISPOSITIF ET PROCEDE DE FIXATION D'OBJETS

(30) Priorität: 01.03.2000 DE 10009994
(43) Veröffentlichungstag der Anmeldung: 24.04.2002
(73) Patentinhaber: Adolf Würth GmbH & Co. KG, 74653 Künzelsau (DE)
(72) Erfinder: KERL, Gregor, 74676 Niedernhall (DE)
(74) Vertreter: Patentanwälte Ruff, Wilhelm, Beier, Dauster & Partner
(86) Internationale Anmeldenummer: PCT/EP2001/002045
(87) Internationale Veröffentlichungsnummer: WO 2001/065124

(56) Entgegenhaltungen:
- FR-A- 1 325 312
- US-A- 4 856 953
- US-A- 5 246 323

## Beschreibung

An den Außenwänden von Gebäuden werden häufig nachträglich Isolierungen angebracht. Dabei kann es sich sowohl um plattenförmiges Material als auch um Matten oder dgl. handeln. Diese haben häufig eine nicht zu vernachlässigende Dicke von einigen Zentimetern. Da das Material sehr leicht und instabil ist, ist es nicht möglich, in diesem Material Verankerungen vorzunehmen. Es ist aber häufig erforderlich, auch an Wänden, Decken oder dergleichen, die mit solchen Materialien versehen sind, weitere Gegenstände zu befestigen, beispielsweise an der Außenseite eines Gehäuses eine Lampe oder einen Bewegungsmelder.

Es ist bereits ein Dübel bekannt, der aus einer äußeren aufspreizbaren Dübelhülse und einem Aufspreizelement besteht (US-A-5246323). Das Aufspreizelement ist eine Hülse mit einer durchgehenden Innenöffnung, in die von der Vorderseite her ein Bohrer eingesteckt wird. Im Bereich ihres äußeren Endes enthält die Innenöffnung Längsrippen, in die eine Schraube eingeschraubt werden kann.

Der Erfindung liegt die Aufgabe zugrunde, eine Möglichkeit zu schaffen, an Bauelementen Gegenstände anzubringen, wobei diese Möglichkeit auch verwendbar sein soll, wenn die Anbringung mit Abstand erfolgen soll.

Zur Lösung dieser Aufgabe schlägt die Erfindung eine Anordnung mit den Merkmalen des Anspruchs 1, ein Verfahren mit den im Anspruch 9 genannten Merkmalen sowie eine Verwendung mit den Merkmalen des Anspruchs 10 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird. Während bei den handelsüblichen Dübeln das Verankerungselement, beispielsweise eine Schraube oder ein Nagel, gleichzeitig zur Befestigung des Gegenstandes als auch zur Aufspreizung dient, wird bei der Anordnung nach der Erfindung der

Dübel zunächst vollständig verankert, und erst anschließend wird an diesem mit Hilfe eines zweiten Befestigungselementes der Gegenstand befestigt. Der Dübeln dient also eigentlich nur als Träger für das weitere Befestigungselement.

Bei dem Dübel kann es sich in Weiterbildung der Erfindung um einen Spreizdübel mit einer Dübelhülse und einem Aufspreizelement handeln.

Insbesondere kann in Weiterbildung der Erfindung vorgesehen sein, dass die Aufnahme für das weitere Befestigungselementes zwischen dem Kopf des Aufspreizelementes und der Dübelhülse gebildet ist. Beispielsweise kann man an dem Kopf des Aufspreizelementes radial angeordnete Kerben anbringen, die eine Öffnung zwischen dem Kopf und der Dübelhülse bilden. Dort kann eine kleine Schraube eingeschraubt werden, die sich ihr Gewinde in der Dübelhülse selbst formen kann.

In Weiterbildung der Erfindung kann vorgesehen sein, dass das Befestigungselement eine Schraube ist, beispielsweise eine selbstformende Schraube, die sich also ihr Gewinde selbst formt.

Es ist jedoch ebenfalls möglich und wird von der Erfindung vorgeschlagen, dass das weitere Befestigungselement auch ein Dübel ist, bei dem es sich um einen gleichartigen oder auch einen andersartigen Dübel handeln kann.

Insbesondere kann in Weiterbildung der Erfindung vorgesehen sein, dass die Aufnahme für das weitere Befestigungselement ein Sackloch in dem Aufspreizelement ist, das von dem freien Ende des Aufspreizelementes ausgeht.

Bei dem Sackloch kann es sich insbesondere mit Vorteil um ein gewindefreies Sackloch handeln. Solche gewindefreien Sacklöcher lassen sich beim Herstellen der Aufspreizelemente mit einformen, so dass kein zusätzlicher Arbeitsschritt bei der Herstellung des Dübels erforderlich wird. Daher ist die von der Erfindung vorgeschlagene Anordnung auch mit geringen Kosten herstellbar.

Das Sackloch kann insbesondere koaxial zur Längsachse des Aufspreizelementes ausgebildet sein.

Die Anordnung, die von der Erfindung vorgeschlagen wird, kann folgendermaßen verwendet werden. Zunächst wird in üblicher Weise ein Dübelloch hergestellt. Dann wird der Dübel, beispielsweise ein Schraubdübel, in das Dübelloch soweit eingesetzt, dass das äußere Ende des Dübels an der Stelle angeordnet ist, wo der Gegenstand befestigt werden soll. Dies kann beispielsweise mit Abstand von dem Bauelement sein, in dem sich das Dübelloch befindet. Dann wird der Dübel durch das Betätigen des Aufspreizelementes verankert. Anschließend kann an dem äußeren Ende des Dübels der zu befestigende Gegenstand mit dem weiteren Befestigungsmittel befestigt werden.

Die Erfindung hat den Vorteil, dass in dem eingangs genannten Anwendungsfall ein zugelassener Dübel verwendet werden kann, da die Anbringung eines Sacklochs oder einer Kerbe in dem Schraubenkopf nichts an der Zulassung ändert. Der Dübel wird nur soweit eingeführt, dass sein äußeres Ende mit der Außenseite der Isolierplatten oder Isoliermatten übereinstimmt. Dann kann dort ein Gegenstand befestigt werden, der zwar von der Oberfläche des Dämmmaterials keinen Abstand aufweist, dagegen von der Oberfläche des tragenden Bauteils.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: die Verwendung des von der Erfindung vorgeschlagenen Befestigungselementes;
- Fig. 2: schematisch die Ansicht einer Schraube, die als Aufspreizelementen für eine Spreizdübels bestimmt ist.

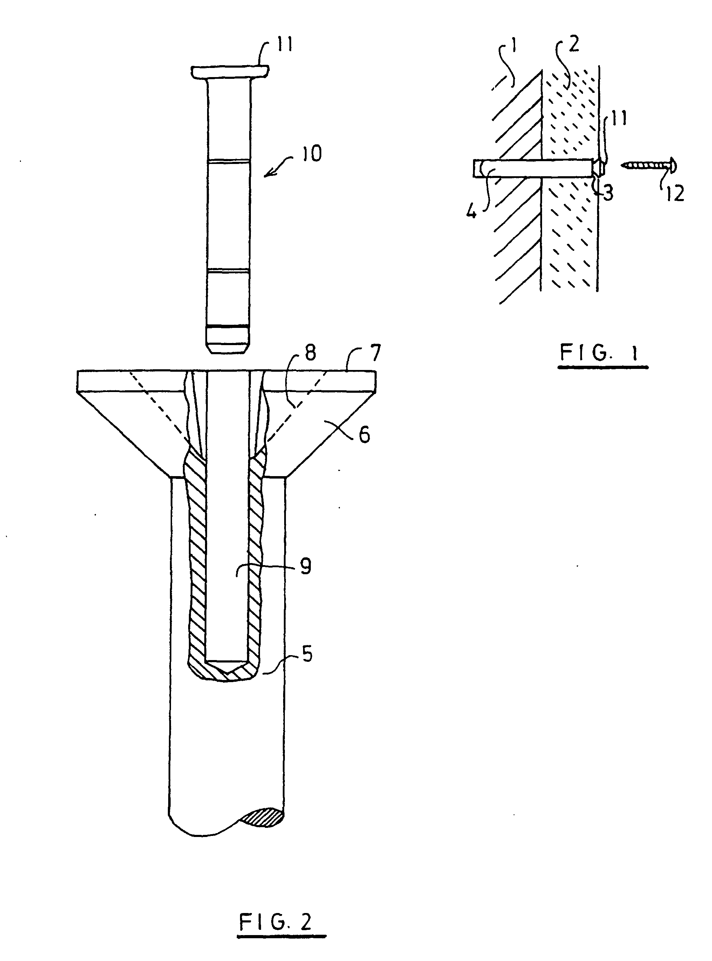

Die Figur 1 zeigt stark vereinfacht einen möglichen Anwendungsfall für die von der Erfindung vorgeschlagene Anordnung. Eine Außenwand 1 eines Gebäudes ist mit einer dicken Schicht 2 aus Isoliermaterial versehen. Dieses Isoliermaterial kann beispielsweise mit Hilfe weiterer nicht dargestellter Befestigungseinrichtungen angebracht sein. Das Isoliermaterial 2 weist eine Beschaffenheit auf, die es unmöglich macht, in diesem Material eine Verankerung durchzuführen. Die Aufgabe des Isoliermaterials ist ausschließlich die thermische Isolierung des Gebäudes.

Wenn nun an dieser mit Isoliermaterial versehen Wand 1 eine Lampe angebracht werden soll, so muss diese Lampe an der tragenden Außenwand 1 befestigt werden. Hierzu dient eine Anordnung, wie sie in größerer Einzelheiten in Figur 2 dargestellt ist. Es wird nämlich ein Dübel verwendet, der in die Außenwand 1 des Gebäudes eingesetzt wird. Der Dübel wird jedoch nicht vollständig in die Außenwand 1 eingesetzt, sondern nur soweit, dass seine Außenseite 3 etwa mit der Oberfläche der Isolierschicht bündig verläuft. Der Dübel, der in Figur 1 schematisch dargestellt ist, enthält eine Dübelhülse 4 und eine in dieser angeordnete Schraube 5, die zur Aufspreizung der Dübelhülse 4 dient. Dübelhülse 4 und Schraube 5 sind in ihrer Länge und in ihrem Durchmesser aufeinander abgestimmt. Für die Verwendung an Gebäuden gibt es Zulassungen, wobei sich die Zulassung immer auf die Kombination aus Dübelhülse 4 und Schraube 5 bezieht.

Das äußere Ende der das Aufspreizelement des Dübels bildenden Schraube 5 ist in größerem Maßstab, teilweise geschnitten, in Figur 2 dargestellt.

Die Schraube 5, die nur in ihrem äußeren Bereich dargestellt ist, enthält einen Schraubenkopf 6, der als Senkkopf ausgebildet ist. Es kann sich hierbei beispielsweise um die Schraube eines Rahmendübels handeln. Der Schraubenkopf weist eine ebene Oberseite 7 auf, in der eine Öffnung 8 ausmündet. Hierbei handelt es sich um eine der vielen bekannten Schraubenantriebsausbildungen, beispielsweise in Form eines Kreuzschlitzes.

Koaxial zur Schraube 5 enthält diese, ausgehend von der ebenen Oberseite 7, ein Sackloch 9. Dieses Sackloch 9 erstreckt sich über eine bestimmte Länge und weist eine glatte Wand auf, das heißt, das Sackloch 9 enthält kein Gewinde. Dieses Sackloch 9 lässt sich bei der Herstellung der Schraube beim Formen des Schraubenkopfs 6 mit herstellen. Es handelt sich also nicht um einen getrennten Arbeitsgang. Der Durchmesser des Sacklochs 9 ist so gewählt, dass die Festigkeit der Schraube 5 nicht leiden kann. Dadurch ist auch sichergestellt, dass die zum Übertragen des Drehmoments beim Verdrehen der Schraube erforderlichen Flächen der Antriebsvertiefung 8 noch vorhanden sind.

Der Schraube 5 ist ein weiterer Dübel 10 zugeordnet, dessen Außendurchmesser etwa dem Innendurchmesser des Sacklochs 9 entspricht. Gleiches gilt für die Länge. Bei dem weiteren Dübel 10 kann es sich beispielsweise ebenfalls um einen durch eine Schraube aufspreizbaren Dübel handeln.

Wenn der Dübel in der unter Bezugnahme auf Figur 1 beschriebenen Weise an dem tragenden Teil, also der Wand 1 befestigt ist, kann nun in die Oberseite 7 des Schraubenkopfs 6 der Dübel 10 eingesetzt werden. Er wird soweit in das Sackloch 9 eingeschoben, bis seine äußere Stirnseite 11 etwa bündig mit der Oberseite 7 des Schraubenkopfs 6 der Schraube 5 verläuft. Dieser Zustand ist in Figur 1 dargestellt. Nun kann mit Hilfe einer dem Dübel 10 zugeordneten Schraube 12 ein Gegenstand über den Dübel 10 an der Schraube 5 befestigt werden.

## Patentansprüche

1. Anordnung zum Befestigen von Gegenständen an einem Bauelement (1), mit
1.1 einem aus einer Dübelhülse (4) und einem in dieser angeordneten Verankerungselement (5) bestehenden Dübel, der
1.1.1 zum Einsetzen in ein Dübelloch ausgebildet und
1.1.2 durch das Verankerungselement (5) in dem Dübelloch verankerbar ist, wobei
1.2 der Dübel eine Aufnahme (9) für ein weiteres Befestigungselement (10) aufweist,
**dadurch gekennzeichnet, dass**
1.3 die Aufnahme für das weitere Befestigungselement (10) ein Sackloch (9) und
1.4 das weitere Befestigungselement ein Dübel (10) ist

2. Anordnung nach Anspruch 1, bei der der Dübel ein Spreizdübel mit einer Dübelhülse (4) und einem Aufspreizelement (5) ist.

3. Anordnung nach Anspruch 2, bei der die Aufnahme für das weitere Befestigungselement (10) zwischen dem Kopf (6) des Aufspreizelementes (5) und der Dübelhülse (4) gebildet ist.

4. Anordnung nach einem der vorhergehenden Ansprüche 2 bis 3, bei der das Aufspreizelement des weiteren Befestigungselements (10) eine Schraube (12) ist.

5. Anordnung nach einem der vorhergehenden Ansprüche 2 bis 4, bei der das Sackloch (9) koaxial zum Aufspreizelement (5) angeordnet ist.

6. Anordnung nach einem der vorhergehenden Ansprüche, bei der das Sackloch (9) gewindefrei ist.

7. Verwendung einer Anordnung nach einem der Ansprüche 1 bis 6 zur Befestigung eines Gegenstandes mit Abstand an einem tragenden Bauelement (1).

8. Verwendung nach Anspruch 7 zur Befestigung eines Gegenstandes an einer mit Isoliermaterial (2) versehenen Gebäudewand (1) oder Gebäudedecke.

9. Verwendung nach Anspruch 7 oder 8, bei der ein zugelassener Dübel verwendet wird.

## Claims

1. Arrangement to affix objects to a component (1) with
1.1 a plug consisting of a plug sleeve (4) and an anchoring element (5) within the sleeve
1.1.1 to be inserted in a plug hole, and
1.1.2 that is anchored by the anchoring element (5) in the plug hole,
wherein
1.2 the plug has a seat (7) for another fastening element (10),
**characterized in that**
1.3 the seat for the other fastening element (10) is a blind hole (9), and
1.4 the other fastening element is a plug (10).

2. Arrangement according to claim 1, wherein the plug is an expansion plug with a plug sleeve (4) and a spreading element (5).

3. Arrangement according to claim 2, wherein the seat for the other fastening element (10) is between the head (6) of the spreading element (5) and the plug sleeve (4).

4. Arrangement according to one of prior claims 2 to 3, wherein the spreading element of the other fastening element (10) is a screw (12).

5. Arrangement according to one of prior claims 2 to 4, wherein the blind hole (9) is coaxial with the spreading element (5).

6. Arrangement according to one of the prior claims, wherein the blind hole (9) has no thread.

7. Use of an arrangement according to one of claims 1 to 6 to fasten an object at a distance to a bearing component (1).

8. Use according to claim 7 to fasten an object to a building wall (1) or building ceiling provided with insulating material (2).

9. Use according to claim 7 or 8, wherein an authorized plug is used.

## Revendications

1. Un dispositif de fixation d'objets sur un élément de construction (1 ), comportant
1.1 une cheville, composée d'une douille de cheville (4) et d'un élément d'ancrage (5) disposé dans cette dernière, qui
1.1.1 est conçue pour son insertion dans un trou de cheville et qui
1.1.2 peut être ancrée par l'intermédiaire de l'élément d'ancrage (5) dans le trou de cheville,
1.2 la cheville (10) présentant un support de réception (9) pour un second élément de fixation (10),
le dispositif étant **caractérisé en ce que**
1.3 le support du second élément de fixation (10) est un trou borgne (9), et que
1.4 le second élément de fixation est une cheville (10).

2. Un dispositif conforme à la revendication 1, où la cheville est une cheville expansible comportant une douille de cheville (4) et un élément écarteur (5).

3. Un dispositif conforme à la revendication 2, où le support pour le second élément de fixation (10) est formé entre la tête (6) de l'élément écarteur (5), et la douille de cheville (4).

4. Un dispositif conforme à une des revendications précédentes 2 à 3, où l'élément écarteur du second élément de fixation (10) est une vis (12).

5. Un dispositif conforme à une des revendications précédentes 2 à 4, où le trou borgne (9) est disposé sur le même axe que l'élément écarteur (5).

6. Un dispositif conforme à une des revendications précédentes, où le trou borgne (9) ne comporte pas de filetage.

7. L'utilisation d'un dispositif conforme à une des revendications 1 à 6, pour la fixation d'un objet avec un écartement sur un élément de construction (1 ) porteur.

8. L'utilisation selon la revendication 7 pour la fixation d'un objet sur le mur d'un bâtiment (1) ou le plafond d'un bâtiment revêtu d'un habillage en matériau isolant.

9. L'utilisation selon la revendication 7 ou 8, où l'on met en oeuvre une cheville homologuée.
